# EUROPEAN PATENT SPECIFICATION

(11) **EP 2 626 558 B1**
(45) Date of publication and mention of the grant of the patent: **14.09.2016**
(21) Application number: 12154933.1
(22) Date of filing: 10.02.2012
(51) Int. Cl.: F03D 80/00, F03D 15/00

(54) **Main shaft for a wind turbine**
Hauptwelle für eine Windturbine
Arbre principal pour éolienne

(43) Date of publication of application: 14.08.2013
(73) Proprietor: Siemens Aktiengesellschaft, 80333 München (DE)
(72) Inventor: Birkemose, Bo, 7330 Brande (DK); Poulsen, Knud Erik, 8270 Hojbjerg (DK)

(56) References cited:
- EP-A1- 1 359 321
- EP-A2- 0 585 623
- JP-A- 2007 218 796
- US-A1- 2011 135 468

## Description

The invention relates to a main shaft for a wind turbine, wherein a first end of the main shaft is adapted to be secured to a rotor hub mounting a plurality of rotor blades and a second end of the main shaft is adapted to be connected to a generator capable of converting rotational energy to electrical energy.

A main shaft of a wind turbine, see e.g. EP 1359321 A, rotatably mounts a rotor hub to a nacelle of the wind turbine. The main shaft has to sustain big loads during operation of the wind turbine, since it has to carry the weight of the rotor hub and the rotor blades attached thereto. Furthermore, rotational energy is directly or indirectly - transmitted by the main shaft to the generator of the wind turbine that converts the rotational energy to electrical energy. As a consequence, main shafts are inherently prone to fatigue of material. Fatigue cracks may occur any time during operation of the wind turbine. It has been shown that after initial crack formation or crack initiation, fatigue cracks may - depending on the size and capacity of the wind turbine under consideration - reach a critical size in as little as half a year. A failure of the main shaft may result in the rotor hub and the rotor blades attached thereto falling to the ground. In a worst case scenario, the whole wind turbine will collapse.

Usually, this problem is addressed by performing surveillance and maintenance work on the main shaft at regular time intervals. This is achieved by maintenance personnel entering the wind turbine which needs to be shut down for safety reasons. The maintenance personal typically performs non-destructive measurements such as ultrasonic probing of the main shaft. The ultrasonic testing is performed with the help of portable ultrasound probes or transducers and diagnostic devices connected thereto. However, in particular when considering the sizes of today's wind farms, inspection of every wind turbine of the wind park as often as once every half year will cause considerable maintenance costs.

It is an object of the present invention to address the problem of fatigue of material occurring in main shafts of wind turbines in a cost-efficient way.

The object is achieved by a main shaft as defined herein before, wherein a measuring device for non-destructive testing of the integrity of the main shaft is permanently mounted to the main shaft so as to allow for a continuous measurement of the integrity of the main shaft.

During operation of the wind turbine comprising the main shaft, the measuring device for non-destructive testing provides a means that continuously monitors the integrity of the main shaft. This allows for a discovery of fatigue cracks at an early stage. The measuring device may be connected to a transmitter device capable of transmitting measurement results to an exterior surveillance facility operated by maintenance personnel. If a material defect is detected the maintenance personnel may react adequately and shut down the corresponding wind turbine and/or perform maintenance work on the defect main shaft. The measuring device permanently attached to the main shaft removes the need of entering the wind turbine for surveillance purposes at regular time intervals so that maintenance costs are reduced.

Preferably the measuring device comprises at least one ultrasonic probe. Ultrasonic probes provide a robust and inexpensive means for reliably testing the integrity of the main shaft. The ultrasonic probe generates ultrasonic waves that are coupled into the main shaft so as to propagate longitudinally along the main shaft. Conclusions about the integrity of the main shaft, in particular about the existence of fatigue cracks, may be drawn from measured propagation times of the ultrasonic wave or pulse. For continuous testing of the main shaft, the ultrasonic probe repeatedly emits and detects ultrasonic waves or pulses.

It is advantageous to dispose the at least one ultrasonic probe at the first end of the main shaft adapted to be mounted to the rotor hub. The first end may comprise a flange for accepting a plurality of mounting means such as bolts configured to firmly secure the main shaft to the rotor hub. The first end of the main shaft is easily accessible from inside the rotor hub, so that a defect ultrasonic probe may be easily replaced when necessary.

Preferably a plurality of ultrasonic probes are circumferentially disposed about a rotational axis of the main shaft. The ultrasonic probes generate ultrasonic waves or pulses that are coupled into the main shaft so as to travel from the first end of the main shaft towards the opposing second end of the main shaft. Respectively, the ultrasonic waves are back-reflected at the second end, wherein the back reflections propagate backwards from the second end towards the first end of the main shaft. The ultrasonic probes detect the back reflections and measure the total propagation time of the corresponding ultrasonic waves or pulses. Existing cracks will introduce back - reflections that correspond to short propagation times. In the ideal case, i.e. when no cracks are present, the propagation time would be determined by the length of the main shaft and the speed of sound in the media of the main shaft. The detection of shorter propagation times indicate material defects. The ultrasonic probes are circumferentially disposed around the rotational axis of the main shaft at regular intervals so as to cover the whole main shaft. The integrity of the main shaft may thus be reliably investigated, cracks may be detected at an early stage and main shaft failures may be avoided.

In a preferred embodiment of the invention, three ultrasonic probes are disposed around the rotational axis of the main shaft. Experience has shown that a minimal configuration capable of reliably investigating the integrity of the main shaft consists in three ultrasonic probes located at the first end of the main shaft. The system of three ultrasonic probes thus provides a cost-efficient means to implement the measuring device for non-destructive testing of the integrity of the main shaft.

It is beneficial to connect all ultrasonic probes by a relay circuit. A relay of the relay circuit provides a simple fail/safe output: during normal use, the contact of the relay is closed. If one of the ultrasonic probes detects a fatigue crack of critical size within the main shaft or one of the ultrasonic probes fails to work, the contact of the relay is opened. The relay circuit may be connected to a control unit of the wind turbine and/or to the transmitter unit. When a defect main shaft or a defect ultrasonic probe is detected, a signal will be sent to a control unit to shut down the wind turbine for safety reasons.

The invention further relates to the wind turbine comprising the main shaft as described herein before. The rotor hub of the wind turbine mounts the plurality of rotor blades. The rotor hub is secured to the first end of the main shaft and the second end of the main shaft is - directly or indirectly - connected to the generator capable of converting rotational energy to electrical energy. Indirect connection of the main shaft to the generator is achieved by arranging a gear box between the main shaft and the generator. The generator comprises a rotor and a stator, wherein the rotor is rotatably arranged relative to the stator. The measuring device for non-destructive testing of the integrity of the main shaft is permanently mounted to the main shaft so as to allow for a continuous measurement of the integrity of the main shaft during operation of the wind turbine. In particular, the continuous measurement allows for an early discovery of existing material defects so that a failure of the main shaft may be avoided.

Preferably, the measuring device is connected to the control device of the wind turbine. The control device is capable of controlling operational modes of the wind turbine. In particular, the wind turbine may be shut down by the control device so as to prevent a generation of electrical power.

Another aspect of the invention relates to a method for testing the integrity of the main shaft, wherein the measuring device is continuously performing non-destructive testing of the integrity of the main shaft during operation of the wind turbine. The measuring device is continuously providing data that contains information about the current state of the main shaft. It is not required to enter the wind turbine and perform manual measurements for surveillance purposes. Thus, maintenance costs and efforts are reduced.

A simple and efficient way how to implement the continuous non-destructive testing is given by repeatedly coupling ultrasonic waves into the main shaft and measuring the propagation time of each of the ultrasonic waves propagating along at least a section of the main shaft. The ultrasonic waves will be back-reflected by either a boundary of the main shaft or a crack that is located within the main shaft.

In one preferred embodiment each ultrasonic wave is coupled into the first end of the main shaft so as to propagate parallel to the rotational axis of the main shaft. Consequently, the echo of each ultrasonic wave is detected by at least one of the ultrasonic probes located at the first end of the main shaft. The echo is generated by back-reflections that are caused by the boundary of the main shaft, in particular the second end of the main shaft, or material defects. The ultrasonic waves propagate along the complete longitudinal length of the main shaft so that the complete main shaft is scanned.

The propagation time of each ultrasonic wave is determined by detecting a corresponding back-reflection of the respective ultrasonic wave at the first end of the main shaft. In the ideal case, i.e. when no crack is present, the measured propagation time corresponds to an ultrasonic wave that has travelled a distance corresponding to twice the length of the main shaft. Shorter propagation times may be measured when defects such as fatigue cracks are present in the material of the main shaft.

A defect main shaft or a defect measurement device is identified when the measured value for the propagation time undercuts a reference value. The reference value may correspond to ultrasonic waves or pulses travelling along a distance corresponding to twice the length of the main shaft. If applicable, other suitable reference values may be introduced in order to safely detect material defects by comparing the measured value of the propagation time with the pre-determined reference value.

In a preferred embodiment of the invention, the wind turbine is automatically shut down when a defect main shaft or a defect measurement device is identified. When the wind turbine is shut down, the rotor hub is fixed relative to a nacelle of the wind turbine in a fixed angular position, so that maintenance personal may enter the rotor hub safely. Consequently, the defect main shaft or the defect measurement device may be replaced.

Further scope and applicability of the present invention will become apparent to those skilled in the art by considering the following detailed description of preferred embodiments and the accompanying figures, wherein
- fig. 1: illustrates a wind turbine with a main shaft having a measurement device for non-destructive testing attached thereto, and
- fig. 2: illustrates the main shaft with the measurement device of a preferred embodiment in an isometric view.

Corresponding elements are marked in all figures with the same reference symbols.

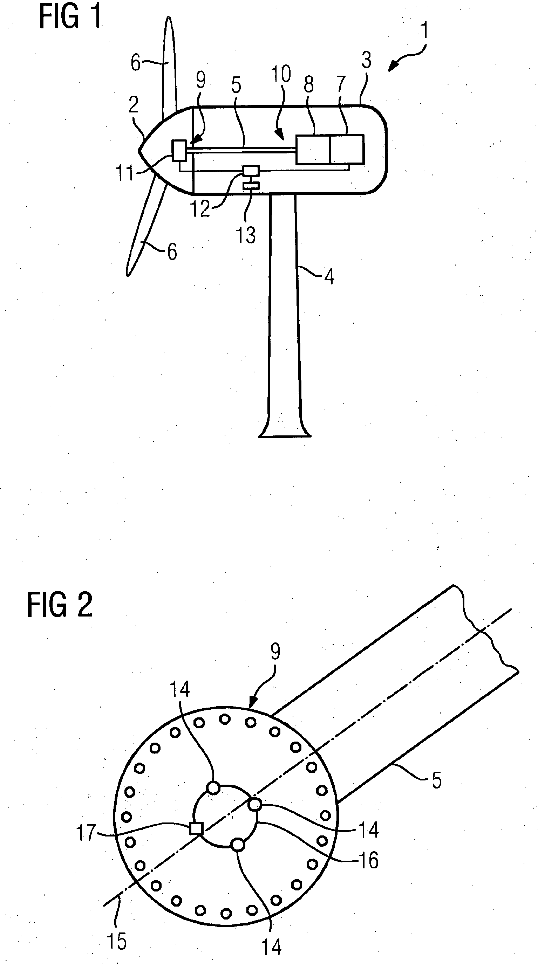

Fig. 1 shows a wind turbine 1 in a schematic side view. A rotor hub 2 is rotatably mounted to a nacelle 3 of the wind turbine 1. The nacelle 3 is pivotably mounted on a tower 4 of the wind turbine 1. A main shaft 5 connects the rotor hub 2 mounting a plurality of rotor blades 6 to the generator 7. In the exemplary embodiment shown in,fig. 1, a gear box 8 is arranged between the main shaft 5 and the generator 7 that may be used to set a transmission of torque to a rotor of the generator 7.

It is understood that the gear box 8 is an optional component and that the present invention may be applied to wind turbines 1 utilizing gearless driven generators, i.e. wind turbines 1, wherein the main shaft 5 is directly connected to the generator 7.

The main shaft 5 comprises a first end 9 firmly attached to the rotor hub 2. A second end 10 is connected - either directly or via an intermediate gear box 8 - to the generator 7 so as to allow for a mechanical transmission of rotational energy to the generator 7.

The generator 7 converts the rotational energy to electrical energy. The working principle of the generator 7 is well known in the art and comprises usual components such as rotors and stators that are configured to induce electric currents by utilizing magnetic fields.

A measurement device 11 for non-destructive testing of the integrity of the main shaft 5 is permanently mounted to the first end 9 of the main shaft 5. During operation of the wind turbine 1 the measurement device 11 continuously collects data so as to investigate the integrity of the main shaft 5 in particular in regard to fatigue of material. The measurement device 11 is connected to a control device 12 of the wind turbine 1. The measurement device 11 is capable of analysing the measured data so that material defects, in particular fatigue cracks, may be detected.

Furthermore, the control device 12 is capable of setting operational modes of the wind turbine 1. If a fatigue crack of a critical size is detected, the wind turbine 1 is automatically shut down by the control device 12. For security reasons, the rotor hub 2 is secured to the nacelle 3, so that a rotation of the rotor hub 2 with respect to the nacelle 3 is blocked. At the same time a signal is sent from a transmitter device 13 to an exterior maintenance facility informing maintenance personnel about the location of the wind turbine 1 with the defect main shaft 5.

Fig. 2 shows the measurement device 11 according to a preferred embodiment of the invention. The measurement device 11 is attached to the first end 9 exhibiting a flange mounting a plurality of mounting means for securing the main shaft 5 to the rotor hub 2.

The measurement device 11 comprises three ultrasonic probes 14 circumferentially arranged around the rotational axis 15. The ultrasonic probes 14 are connected by a relay circuit 16 comprising a relay 17. The ultrasonic probes 14 repeatedly couple ultrasonic waves or pulses into the main shaft 5. If no material defects are present the ultrasonic waves propagate along the main shaft 5 and are back reflected at the second end 10 of the main shaft 5. The echoes of the ultrasonic waves are detected by the ultrasonic probes 14 and corresponding values of propagation times are measured. The propagation time required for the ultrasonic waves to travel twice the length of the main shaft is used as a reference value. If one of the probes 14 measures a shorter value for the propagation time of one of the ultrasonic waves, the signal is attributed to a defect or crack in the material of the main shaft 5. As a result, the relay 17 is opened and another signal is transmitted to the control device 12 to shut down the wind turbine 1 for safety reasons.

Although the present invention has been described in detail with reference to the preferred embodiment, the present invention is not limited by the disclosed examples from which the skilled person is able to derive other variations without departing from the scope of the invention, which is defined by the appended claims.

## Claims

1. Main shaft (5) for a wind turbine (1), wherein a first end (9) of the main shaft (5) is adapted to be secured to a rotor hub (2) mounting a plurality of rotor blades (6) and a second end (10) of the main shaft (5) is adapted to be connected to a generator (7) capable of converting rotational energy to electrical energy, **characterized in that** a measuring device (11) for non-destructive testing of the integrity of the main shaft (5) is permanently mounted to the main shaft (5) so as to allow for a continuous measurement of the integrity of the main shaft (5).

2. Main shaft (5) according to claim 1, **characterized in that** the measuring device (11) comprises at least one ultrasonic probe (14).

3. Main shaft (5) according to claim 2, **characterized in that** the at least one ultrasonic probe (14) is disposed at the first end (9) adapted to be mounted to the rotor hub (2).

4. Main shaft (5) of claim 3, **characterized in that** a plurality of ultrasonic probes (14) are circumferentially disposed around a rotational axis (15) of the main shaft (5).

5. Main shaft (5) of claim 4, **characterized in that** three ultrasonic probes (14) are disposed around the rotational axis (15) of the main shaft (5).

6. Main shaft (5) of claim 4 or 5, **characterized in that** the ultrasonic probes (14) are connected by a relay circuit (16).

7. Wind turbine (1) comprising a main shaft (5) according to one of the previous claims, wherein a rotor hub (2) mounting a plurality of rotor blades (6) is secured to a first end (9) of the main shaft (5) and a second end (10) of the main shaft (5) is connected to a generator (7) capable of converting rotational energy to electrical energy, **characterized in that** a measuring device (11) for non-destructive testing of the integrity of the main shaft (5) is permanently mounted to the main shaft (5) so as to allow for a continuous measurement of the integrity of the main shaft (5) during operation of the wind turbine (1).

8. Wind turbine (1) according to claim 7, **characterized in that** the measuring device (11) is connected to a control device (12) of the wind turbine (1) capable of controlling operational modes of the wind turbine (1).

9. Method for testing the integrity of a main shaft (5) of a wind turbine (1) according to claim 7 or 8, **characterized in that** a measuring device (11) is continuously performing non-destructive testing of the integrity of the main shaft (5) during operation of the wind turbine (1).

10. Method according to claim 9, **characterized in that** the continuous non-destructive testing is performed by repeatedly coupling ultrasonic waves into the main shaft (5) and measuring the propagation time of each of the ultrasonic waves propagating along at least a section of the main shaft (5).

11. Method according to claim 10, **characterized in that** each ultrasonic wave is coupled into a first end (9) of the main shaft (5) so as to propagate parallel to a rotational axis (15) of the main shaft (5).

12. Method according to claim 10 or 11, **characterized in that** the propagation time of each ultrasonic wave is determined by detecting a corresponding back reflection of the respective ultrasonic wave at the first end (9) of the main shaft (5).

13. Method according one of the claims 10 to 12, **characterized in that** a defect main shaft (5) or a defect measurement device (11) is identified when a measured value for the propagation time undercuts a reference value.

14. Method according to claim 13, **characterized in that** the wind turbine (1) is automatically shut down when a defect main shaft (5) or a defect measurement device (11) is identifield.

## Patentansprüche

1. Hauptwelle (5) für eine Windturbine (1), wobei ein erstes Ende (9) der Hauptwelle (5) so ausgelegt ist, dass es sich an einer Rotornabe (2) befestigen lässt, an der mehrere Rotorblätter (6) angebracht sind, und ein zweites Ende (10) der Hauptwelle (5) so ausgelegt ist, dass es sich mit einem Generator (7) verbinden lässt, der in der Lage ist, Rotationsenergie in elektrische Energie umzuwandeln, **dadurch gekennzeichnet, dass** eine Messvorrichtung (11) für zerstörungsfreies Prüfen der Integrität der Hauptwelle (5) dauerhaft an der Hauptwelle (5) angebracht ist, damit ein kontinuierliches Messen der Integrität der Hauptwelle (5) möglich ist.

2. Hauptwelle (5) nach Anspruch 1, **dadurch gekennzeichnet, dass** die Messvorrichtung (11) mindestens eine Ultraschallsonde (14) umfasst.

3. Hauptwelle (5) nach Anspruch 2, **dadurch gekennzeichnet, dass** die mindestens eine Ultraschallsonde (14) an dem ersten Ende (9) angeordnet ist, welches so ausgelegt ist, dass es sich an der Rotornabe (2) anbringen lässt.

4. Hauptwelle (5) nach Anspruch 3, **dadurch gekennzeichnet, dass** mehrere Ultraschallsonden (14) in Umfangsrichtung um eine Rotationsachse (15) der Hauptwelle (5) herum angeordnet sind.

5. Hauptwelle (5) nach Anspruch 4, **dadurch gekennzeichnet, dass** drei Ultraschallsonden (14) um die Rotationsachse (15) der Hauptwelle (5) herum angeordnet sind.

6. Hauptwelle (5) nach Anspruch 4 oder 5, **dadurch gekennzeichnet, dass** die Ultraschallsonden (14) über eine Relaisschaltung (16) verbunden sind.

7. Windturbine (1) mit einer Hauptwelle (5) nach einem der vorhergehenden Ansprüche, wobei eine Rotornabe (2), an der mehrere Rotorblätter (6) angebracht sind, an einem ersten Ende (9) der Hauptwelle (5) befestigt und ein zweites Ende (10) der Hauptwelle (5) mit einem Generator (7) verbunden ist, der in der Lage ist, Rotationsenergie in elektrische Energie umzuwandeln, **dadurch gekennzeichnet, dass** eine Messvorrichtung (11) für zerstörungsfreies Prüfen der Integrität der Hauptwelle (5) dauerhaft an der Hauptwelle (5) angebracht ist, damit beim Betrieb der Windturbine (1) ein kontinuierliches Messen der Integrität der Hauptwelle (5) möglich ist.

8. Windturbine (1) nach Anspruch 7, **dadurch gekennzeichnet, dass** die Messvorrichtung (11) mit einer Steuervorrichtung (12) der Windturbine (1) verbunden ist, die in der Lage ist, Betriebsmodi der Windturbine (1) zu steuern.

9. Verfahren zum Prüfen der Integrität einer Hauptwelle (5) einer Windturbine (1) nach Anspruch 7 oder 8, **dadurch gekennzeichnet, dass** eine Messvorrichtung (11) beim Betrieb der Windturbine (1) kontinuierlich ein zerstörungsfreies Prüfen der Integrität der Hauptwelle (5) durchführt.

10. Verfahren nach Anspruch 9, **dadurch gekennzeichnet, dass** das kontinuierliche zerstörungsfreie Prüfen durch wiederholtes Einkoppeln von Ultraschallwellen in die Hauptwelle (5) und Messen der Laufzeit jeder der sich in zumindest einem Abschnitt der Hauptwelle (5) ausbreitenden Ultraschallwellen erfolgt.

11. Verfahren nach Anspruch 10, **dadurch gekennzeichnet, dass** jede Ultraschallwelle in ein erstes Ende (9) der Hauptwelle (5) eingekoppelt wird, so dass sie sich parallel zu einer Rotationsachse (15) der Hauptwelle (5) ausbreitet.

12. Verfahren nach Anspruch 10 oder 11, **dadurch gekennzeichnet, dass** durch Erfassen der entsprechenden Rückreflexion der jeweiligen Ultraschallwelle am ersten Ende (9) der Hauptwelle (5) die Laufzeit jeder Ultraschallwelle ermittelt wird.

13. Verfahren nach einem der Ansprüche 10 bis 12, **dadurch gekennzeichnet, dass** eine defekte Hauptwelle (5) oder Messvorrichtung (11) erkannt wird, wenn ein Messwert für die Laufzeit einen Bezugswert unterschreitet.

14. Verfahren nach Anspruch 13, **dadurch gekennzeichnet, dass** die Windturbine (1) automatisch abgeschaltet wird, wenn eine defekte Hauptwelle (5) oder Messvorrichtung (11) erkannt wird.

## Revendications

1. Arbre principal (5) pour une éolienne (1), dans lequel une première extrémité (9) de l'arbre principal (5) est adaptée à être fixée sur un moyeu (2) de rotor montant une pluralité de pales (6) de rotor et une deuxième extrémité (10) de l'arbre principal (5) est adaptée à être connectée à un générateur (7) apte à convertir l'énergie de rotation en énergie électrique, **caractérisé en ce qu'**un dispositif de mesure (11) pour des tests non destructifs de l'intégrité de l'arbre principal (5) est monté de façon permanente sur l'arbre principal (5) de façon à permettre une mesure continue de l'intégrité de l'arbre principal (5).

2. Arbre principal (5) selon la revendication 1, **caractérisé en ce que** le dispositif de mesure (11) comprend au moins une sonde à ultrasons (14).

3. Arbre principal (5) selon la revendication 2, **caractérisé en ce que** l'au moins une sonde à ultrasons (14) est disposée au niveau de la première extrémité (9) adaptée à être fixée sur le moyeu (2) de rotor.

4. Arbre principal (5) selon la revendication 3, **caractérisé en ce qu'**une pluralité de sondes à ultrasons (14) sont disposées circonférentiellement autour d'un axe de rotation (15) de l'arbre principal (5).

5. Arbre principal (5) selon la revendication 4, **caractérisé en ce que** trois sondes à ultrasons (14) sont disposées autour de l'axe de rotation (15) de l'arbre principal (5).

6. Arbre principal (5) selon la revendication 4 ou 5, **caractérisé en ce que** les sondes à ultrasons (14) sont connectées par un circuit relais (16).

7. Éolienne (1) comprenant un arbre principal (5) selon l'une des revendications précédentes, dans laquelle un moyeu (2) de rotor montant une pluralité de pales (6) de rotor est fixé à une première extrémité (9) de l'arbre principal (5) et une deuxième extrémité (10) de l'arbre principal (5) est connectée à un générateur (7) apte à convertir l'énergie de rotation en énergie électrique, **caractérisée en ce qu'**un dispositif de mesure (11) pour des tests non destructifs de l'intégrité de l'arbre principal (5) est monté de façon permanente sur l'arbre principal (5) de façon à permettre une mesure continue de l'intégrité de l'arbre principal (5) pendant le fonctionnement de l'éolienne (1).

8. Éolienne (1) selon la revendication 7, **caractérisée en ce que** le dispositif de mesure (11) est connecté à un dispositif de commande (12) de l'éolienne (1) apte à commander des modes de fonctionnement de l'éolienne (1).

9. Procédé pour tester l'intégrité d'un arbre principal (5) d'une éolienne (1) selon la revendication 7 ou 8, **caractérisé en ce qu'**un dispositif de mesure (11) exécute de façon continue des tests non destructifs de l'intégrité de l'arbre principal (5) pendant le fonctionnement de l'éolienne (1).

10. Procédé selon la revendication 9, **caractérisé en ce que** les tests non destructifs continus sont exécutés par le couplage répété d'ondes ultrasonores à l'intérieur de l'arbre principal (5) et la mesure du temps de propagation de chacune des ondes ultrasonores se propageant le long d'au moins une section de l'arbre principal (5).

11. Procédé selon la revendication 10, **caractérisé en ce que** chaque onde ultrasonore est couplée dans une première extrémité (9) de l'arbre principal (5) de façon à se propager parallèle à un axe de rotation (15) de l'arbre principal (5).

12. Procédé selon la revendication 10 ou 11, **caractérisé en ce que** le temps de propagation de chaque onde ultrasonore est déterminé en détectant une réflexion en retour correspondante de l'onde ultrasonore respective à la première extrémité (9) de l'arbre principal (5).

13. Procédé selon l'une des revendications 10 à 12, **caractérisé en ce qu'**un arbre principal (5) défectueux ou un dispositif de mesure (11) défectueux est identifié lorsqu'une valeur mesurée pour le temps de propagation coupe une valeur de référence.

14. Procédé selon la revendication 13, **caractérisé en ce que** l'éolienne est automatiquement mise à l'arrêt lorsqu'un arbre principal (5) défectueux ou un dispositif de mesure (11) défectueux est identifié.
